# EUROPEAN PATENT APPLICATION

(11) **EP 4 819 257 A1**
(43) Date of publication of application: **07.10.2026**
(21) Application number: 26162181.7
(22) Date of filing: 04.03.2026
(51) Int. Cl.: H01M 8/04089, H01M 8/0438, H01M 8/04746, H01M 8/04992

(54) **FUEL CELL SYSTEM**

(30) Priority: 01.04.2025 JP 2025060397
(71) Applicant: TOYOTA JIDOSHA KABUSHIKI KAISHA, Toyota-Shi, Aichi-Ken 471-8571 (JP)
(72) Inventor: OHTA (MATSUGAMI), Ayuka, Toyota-shi, Aichi, 471-8571 (JP); MIYAMOTO, Yusuke, Toyota-shi, Aichi, 471-8571 (JP)
(74) Representative: TBK

(57) **Abstract**

A fuel cell system may include a fuel cell stack, a first air supply device, a second air supply device, and a controller. The first air supply device may have a characteristic that a degree of deterioration progresses more rapidly when supplying the air at a supply flow rate within a second range than when supplying the air at a supply flow rate within a first range. The second air supply device may have a characteristic that a degree of deterioration progresses more rapidly when supplying the air at a supply flow rate within a fourth range than when supplying the air at a supply flow rate within a third range. The controller may be configured to determine, based on a required flow rate and first, second, third, and fourth ranges, both a first supply flow rate and a second supply flow rate.

## Description

### CROSS REFERENCE TO RELATED APPLICATION

This application claims priority from Japanese Patent Application No. 2025-060397 filed on April 1, 2025. The entire content of the priority application is incorporated herein by reference.

### TECHNICAL FIELD

The art disclosed herein relates to a fuel cell system.

### BACKGROUND ART

Japanese Patent Application Publication No. 2021-163700 describes a fuel cell system including a fuel cell stack, an air supply device configured to supply air to the fuel cell stack, and a controller configured to control operation of the air supply device.

### SUMMARY

In the fuel cell system of Japanese Patent Application Publication No. 2021-163700, air is supplied to one fuel cell stack using one air supply device. In contrast to this configuration, a configuration in which air is supplied to one fuel cell stack using two or more air supply devices is conceivable. In this case, it is desired to suppress deterioration of the two or more air supply devices.

This specification provides a technology that can suppress the deterioration of a first air supply device and a second air supply device.

In a first aspect of the present technology, a fuel cell system may comprise: a fuel cell stack; a first air supply device configured to supply air to the fuel cell stack; a second air supply device configured to supply the air to the fuel cell stack; and a controller configured to control operations of the first air supply device and the second air supply device. The first air supply device may have a characteristic that a degree of deterioration progresses more rapidly when supplying the air at a supply flow rate within a second range than when supplying the air at a supply flow rate within a first range. The second air supply device may have a characteristic that a degree of deterioration progresses more rapidly when supplying the air at a supply flow rate within a fourth range than when supplying the air at a supply flow rate within a third range. The controller may be configured to: acquire a required flow rate of the air required by the fuel cell stack; determine, based on the required flow rate, the first range, the second range, the third range, and the fourth range, both a first supply flow rate of the air to be supplied to the fuel cell stack by the first air supply device and a second supply flow rate of the air to be supplied to the fuel cell stack by the second air supply device; and control, based on the first supply flow rate and the second supply flow rate, operations of the first air supply device and the second air supply device.

In the above configuration, the frequency at which the first supply flow rate falls within the first range and the second supply flow rate falls within the third range can be increased. Therefore, deterioration of the first air supply device and the second air supply device can be suppressed.

### BRIEF DESCRIPTION OF DRAWINGS

FIG. 1 schematically illustrates configuration of a fuel cell system 2 for the first embodiment.
FIG. 2 illustrates an example of first characteristic information 62 and second characteristic information 64 for the first embodiment.
FIG. 3 illustrates a flowchart diagram of an air supply process executed by a controller 50 for the first embodiment.
FIG. 4 illustrates a schematic diagram of a fuel cell system 202 for the second embodiment.
FIG. 5 illustrates an example of first characteristic information 262 and second characteristic information 264 for the second embodiment.
FIG. 6 illustrates a flowchart diagram of an air supply process executed by a controller 50 for the second embodiment.
FIG. 7 schematically illustrates configuration of a fuel cell system 302 for the third variation.

### DETAILED DESCRIPTION

In a first aspect of the present technology, a fuel cell system may comprise: a fuel cell stack; a first air supply device configured to supply air to the fuel cell stack; a second air supply device configured to supply the air to the fuel cell stack; and a controller configured to control operations of the first air supply device and the second air supply device. The first air supply device may have a characteristic that a degree of deterioration progresses more rapidly when supplying the air at a supply flow rate within a second range than when supplying the air at a supply flow rate within a first range. The second air supply device may have a characteristic that a degree of deterioration progresses more rapidly when supplying the air at a supply flow rate within a fourth range than when supplying the air at a supply flow rate within a third range. The controller may be configured to: acquire a required flow rate of the air required by the fuel cell stack; determine, based on the required flow rate, the first range, the second range, the third range, and the fourth range, both a first supply flow rate of the air to be supplied to the fuel cell stack by the first air supply device and a second supply flow rate of the air to be supplied to the fuel cell stack by the second air supply device; and control, based on the first supply flow rate and the second supply flow rate, operations of the first air supply device and the second air supply device.

In a second aspect, in the first aspect, a rated flow rate of the second air supply device may be greater than a rated flow rate of the first air supply device. The first range may be a range less than a first threshold flow rate. The second range may be a range greater than or equal to the first threshold flow rate. The third range may be a range greater than or equal to a second threshold flow rate, the second threshold flow rate being less than the first threshold flow rate. The fourth range may be a range less than or equal to the second threshold flow rate. The controller may be configured to, when the required flow rate is less than the second threshold flow rate, determine the first supply flow rate to be equal to the required flow rate and the second supply flow rate to be zero.

According to the above configuration, the second air supply device is not driven when the required flow rate is less than the second threshold flow rate. That is, the second air supply device does not supply the air at the supply flow rate within the fourth range. Therefore, the second air supply device can be suppressed from deteriorating.

In a third aspect, in the first or second aspect, a rated flow rate of the second air supply device may be greater than a rated flow rate of the first air supply device. The first range may be a range less than a first threshold flow rate. The second range may be a range greater than or equal to the first threshold flow rate. The third range may be a range greater than or equal to a second threshold flow rate, the second threshold flow rate being less than the first threshold flow rate. The fourth range may be a range less than or equal to the second threshold flow rate. The controller may be configured to, when the required flow rate is greater than or equal to the first threshold flow rate, determine the second supply flow rate to be equal to the required flow rate and the first supply flow rate to be zero.

According to the above configuration, the first air supply device is not driven when the required flow rate is greater than or equal to the first threshold flow rate. That is, the first air supply device does not supply air at the supply flow rate within the second range. Therefore, the first air supply device can be suppressed from deteriorating.

In a fourth aspect, in the first aspect, a rated flow rate of the second air supply device may be the same as a rated flow rate of the first air supply device. The second range may be a range greater than or equal to a fifth threshold flow rate and less than a sixth threshold flow rate. The sixth threshold flow rate may be greater than the fifth threshold flow rate. The first range may be a range less than the fifth threshold flow rate and greater than or equal to the sixth threshold flow rate. The third range may be the same as the first range. The fourth range may be the same as the second range. The controller may be configured to, when an equally-divided flow rate, which is a half of the required flow rate, is less than the fifth threshold flow rate or the equally-divided flow rate is greater than or equal to the sixth threshold flow rate, determine the first supply flow rate and second supply flow rate to be the equally-divided flow rate.

According to the above configuration, when the equally-divided flow rate is less than the fifth threshold flow rate or when the equally-divided flow rate is greater than or equal to the sixth threshold flow rate, the first air supply device and the second air supply device each supply air at a supply flow rate within the first and third ranges. Therefore, the first air supply device and the second air supply device can be suppressed from deteriorating.

In a fifth aspect, in the fourth aspect, the fuel cell system may further comprise a memory configured to store a first deterioration index correlating with a first degree of deterioration of the first air supply device and a second deterioration index correlating with a second degree of deterioration of the second air supply device. The controller may be configured to: when the equally-divided flow rate is greater than or equal to the fifth threshold flow rate and less than the sixth threshold flow rate, and the second degree of deterioration of the second air supply device is greater than the first degree of deterioration of the first air supply device, determine the first supply flow rate to be equal to the required flow rate and the second supply flow rate to be zero, and when the equally-divided flow rate is greater than or equal to the fifth threshold flow rate and less than the sixth threshold flow rate and the first degree of deterioration of the first air supply device is greater than the second degree of deterioration of the second air supply device, determine the second supply flow rate to be equal to the required flow rate and the first supply flow rate to be zero.

According to the above configuration, the first degree of deterioration and the second degree of deterioration can be equalized.

### (First embodiment)

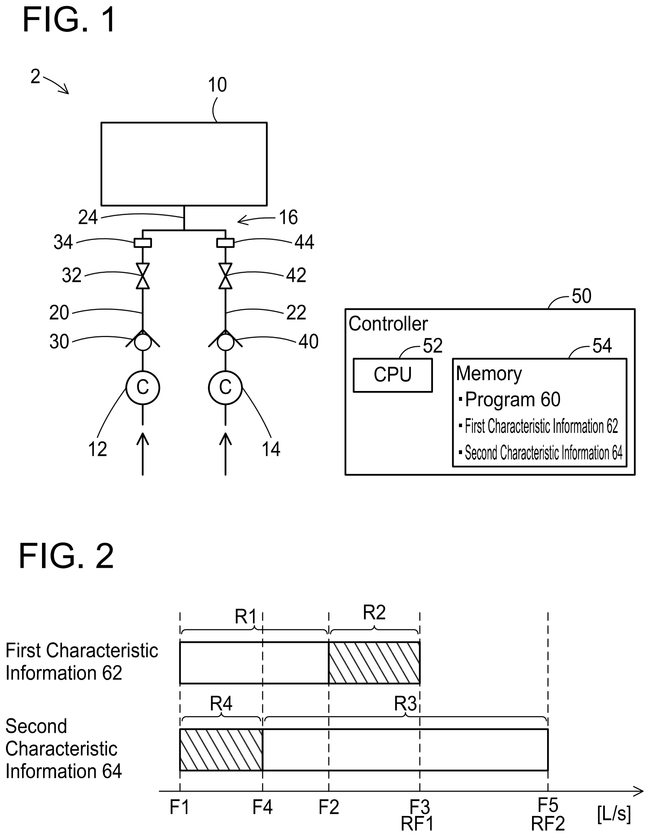

As shown in FIG. 1, a fuel cell system 2 comprises a fuel cell stack 10, a first air compressor 12, a second air compressor 14, supply piping 16, and a controller 50. In one example, the fuel cell system 2 is installed in a fuel cell vehicle. The first air compressor 12 and the second air compressor 14 supply air containing oxygen to the fuel cell stack 10. The fuel cell stack 10 generates electric power by reaction between the oxygen contained in the air supplied from the first air compressor 12 and the second air compressor 14 and hydrogen supplied from a fuel tank (not shown). In this embodiment, the characteristics of the first air compressor 12 and the second air compressor 14 are different.

The supply piping 16 supplies air containing oxygen to the fuel cell stack 10. The supply piping 16 has a first supply piping 20, a second supply piping 22, and a third supply piping 24. The first supply piping 20 and the second supply piping 22 are connected in parallel with each other to the third supply piping 24. The upstream end of the first supply piping 20 is open to outside of the fuel cell system 2. Disposed in the first supply piping 20, in order from the upstream side, are the first air compressor 12, a first check valve 30, a first valve 32, and a first flow sensor 34. The first valve 32 opens and closes the flow path in the first supply piping 20.

The upstream end of the second supply piping 22 is open to outside of the fuel cell system 2. In the second supply piping 22, the second air compressor 14, a second check valve 40, a second valve 42, and a second flow sensor 44 are arranged in this order from the upstream side. The second valve 42 opens and closes the flow path in the second supply piping 22.

The upstream end of the third supply piping 24 is connected to the first supply piping 20 and the second supply piping 22. The downstream end of the third supply piping 24 is connected to the fuel cell stack 10.

The controller 50 has a CPU 52 and a memory 54. The CPU 52 executes various processes according to a program 60 stored in the memory 54. The memory 54 comprises volatile memory, nonvolatile memory, and the like. The memory 54 further stores first characteristic information 62 and second characteristic information 64. The first characteristic information 62 and the second characteristic information 64 are information indicating characteristics of the first air compressor 12 and the second air compressor 14, respectively.

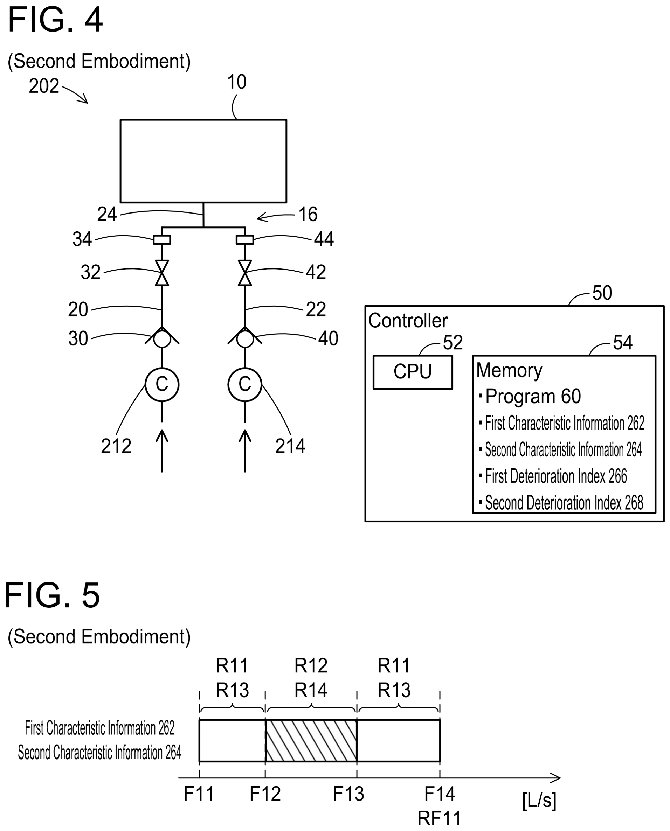

Referring to FIG. 2, the first characteristic information 62 and the second characteristic information 64 will be described. The first characteristic information 62 and the second characteristic information 64 are information that show correlation between the supply flow rate of the air compressor and the degree of deterioration of the air compressor. The first characteristic information 62 is sectioned into a first air volume range R1 and a second air volume range R2. The first air compressor 12 has a characteristic that the degree of deterioration progresses more rapidly when air is supplied at a supply flow rate within the second air volume range R2 than when air is supplied at a supply flow rate within the first air volume range R1. In other words, the first air volume range R1 and the second air volume range R2 can be said to be a deterioration suppression range and a deterioration acceleration range, respectively. In FIG. 2 and FIG. 5 below, the deterioration acceleration range is hatched. The first air volume range R1 is the range from a first flow rate F1 to a second flow rate F2. The first flow rate F1 is equal to the lowest flow rate of air that the first air compressor 12 can supply. The second air volume range R2 is from the second flow rate F2 to a third flow rate F3. The third flow rate F3 is the same as a rated flow rate RF1 of the first air compressor 12.

The second characteristic information 64 is sectioned into a third air volume range R3 and a fourth air volume range R4. The third air volume range R3 and the fourth air volume range R4 are a deterioration suppression range and a deterioration acceleration range, respectively. The third air volume range R3 is the range from a fourth flow rate F4 to the fifth flow rate F5. The fourth flow rate F4 is smaller than the second flow rate F2. The fifth flow rate F5 is greater than the third flow rate F3. The fifth flow rate F5 is the same as a rated flow rate RF2 of the second air compressor 14. That is, the rated flow rate RF2 of the second air compressor 14 is greater than the rated flow rate RF1 of the first air compressor 12. The fourth air volume range R4 is the range from the first flow rate F1 to the fourth flow rate F4. The first flow rate F1 is equal to the lowest flow rate of air that the second air compressor 14 can supply.

As described above, the first air compressor 12 and the second air compressor 14 have different rated flow rates, deterioration acceleration ranges, and deterioration suppression ranges. Specifically, the second air compressor 14, which has a higher rated flow rate, has a deterioration acceleration range on a low flow rate side. On the other hand, specifically, the first air compressor 12, which has a lower rated flow rate, has a deterioration acceleration range on a high flow rate side.

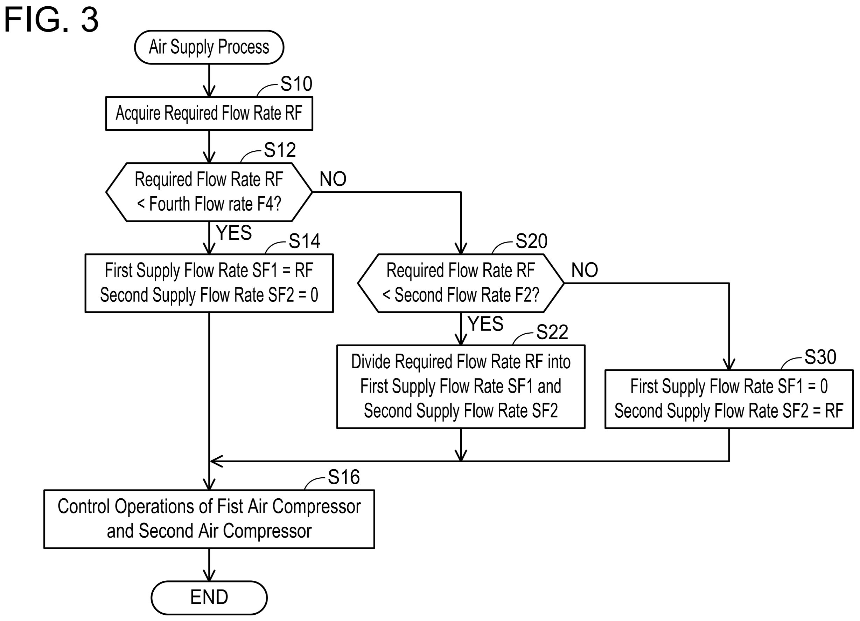

### (Air Supply Process; FIG. 3)

Referring to FIG. 3, an air supply process executed by the controller 50 of the fuel cell system 2 will be described. In a starting state of the air supply process, the first valve 32 and the second valve 42 are open. The controller 50 executes the process shown in FIG. 3 at each predetermined cycle.

In S 10, the controller 50 acquires a required flow rate RF of air required by the fuel cell stack 10. The required flow rate is determined according to a required output corresponding to required power of a traction motor (not shown), for example.

In S12, the controller 50 determines whether the required flow rate RF acquired in S 10 is less than the fourth flow rate F4. That is, the controller 50 determines whether the required flow rate RF is a flow rate within the fourth air volume range R4. If the required flow rate RF is less than the fourth flow rate F4 (YES in S12), the controller 50 proceeds to S 14. Contrary to this, if the required flow rate RF is not less than the fourth flow rate F4 (NO in S12), the controller 50 proceeds to S20.

In S14, the controller 50 determines the first supply flow rate SF1 of air that the first air compressor 12 is to supply to the fuel cell stack 10 and the second supply flow rate SF2 of air that the second air compressor 14 is to supply to the fuel cell stack 10. Specifically, the controller 50 determines the first supply flow rate SF1 to be equal to the required flow rate RF and the second supply flow rate SF2 to be zero.

In S16, the controller 50 controls operations of the first air compressor 12 and the second air compressor 14 based on the first supply flow rate SF1 and the second supply flow rate SF2. Specifically, in S 16 after S14, the controller 50 operates the first air compressor 12 and does not drive the second air compressor 14 so that air at the required flow rate RF is supplied to the fuel cell stack 10. This can suppress the second air compressor 14 from supplying air at a supply flow rate within the fourth air volume range R4. When S16 is completed, the controller 50 terminates the process of FIG. 3.

In S20, the controller 50 determines whether the required flow rate RF is less than the second flow rate F2. That is, the controller 50 determines whether the required flow rate RF is outside the second air volume range R2. If the required flow rate RF is less than the second flow rate F2 (YES in S20), the controller 50 proceeds to S22. Contrary to this, if the required flow rate RF is not less than the second flow rate F2 (NO in S20), the controller 50 proceeds to S30.

In S22, the controller 50 determines the first supply flow rate SF1 and the second supply flow rate SF2 using the required flow rate RF. The controller 50 divides the required flow rate RF into the first supply flow rate SF1 and the second supply flow rate SF2 so that the first supply flow rate SF1 falls within the first air volume range R1 and the second supply flow rate SF2 falls within the third air volume range R3. When S22 is completed, the controller 50 proceeds to S16.

In S16 after S22, the controller 50 controls operation of the first air compressor 12 so that the air of the first supply flow rate SF1 is supplied to the fuel cell stack 10 and the second air compressor 14 so that the air of the second supply flow rate SF2 is supplied to the fuel cell stack 10.

In S30, the controller 50 determines the first supply flow rate SF1 to be zero and the second supply flow rate SF2 to be equal to the required flow rate RF. When S30 is completed, the controller 50 proceeds to S16.

In S16 after S30, the controller 50 operates the second air compressor 14 and does not operate the first air compressor 12 so that air at the required flow rate RF is supplied to the fuel cell stack 10. This can suppress the first air compressor 12 from supplying air at a supply flow rate within the second air volume range R2.

As described above, the fuel cell system 2 comprises a fuel cell stack 10, a first air compressor 12 (an example of "first air supply device"), a second air compressor 14 (an example of "second air supply device"), and a controller 50. The first air compressor 12 has the characteristic that the degree of deterioration progresses more rapidly when supplying air at the supply flow rate within the second air volume range R2 (an example of "second range") than when supplying at the supply flow rate within the first air volume range R1 (an example of "first range"). The second air compressor 14 has the characteristic that the degree of deterioration progresses more rapidly when supplying air at the supply flow rate within the fourth air volume range R4 (an example of "fourth range") than when supplying air at the supply flow rate within the third air volume range R3 (an example of "third range"). The controller 50 is configured to: acquire the required flow rate RF of air required by the fuel cell stack 10 (S10 in FIG. 3); determine both the first supply flow rate SF1 and the second supply flow rate SF2 based on the required flow rate RF, the first air volume range R1, the second air volume range R2, the third air volume range R3, and the fourth air volume range R4 (S 12, 14, S20, S22, S30); and control the operations of the first air compressor 12 and the second air compressor 14 (S16).

With the above configuration, the frequency at which the first supply flow rate SF1 falls within the first air volume range R1 and the second supply flow rate SF2 falls within the third air volume range R3 can be increased. Therefore, the first air compressor 12 and the second air compressor 14 can be suppressed from deteriorating.

The rated flow rate RF2 of the second air compressor 14 is greater than the rated flow rate RF1 of the first air compressor 12. The first air volume range R1 is a range less than the second flow rate F2 (an example of "first threshold flow rate"), and the second air volume range R2 is a range greater than or equal to the second flow rate F2. The third air volume range R3 is a range greater than or equal to the fourth flow rate F4 (an example of "second threshold flow rate"), and the fourth air volume range R4 is a range less than the fourth flow rate F4. The controller 50 is configured to, when the required flow rate RF is less than the fourth flow rate F4 (YES in S12), determine the first supply flow rate SF1 to be equal to the required flow rate RF and the second supply flow rate SF2 to be zero (S14).

According to the above configuration, the second air compressor 14 is not driven when the required flow rate RF is less than the fourth flow rate F4. That is, the second air compressor 14 does not supply air at the supply flow rate within the fourth air volume range R4. Therefore, the second air compressor 14 can be suppressed from deteriorating.

When the required flow rate RF is greater than or equal to the second flow rate F2 (NO in S20), the controller 50 determines the second supply flow rate SF2 to be equal to the required flow rate RF and the first supply flow rate SF1 to be zero (S30).

According to the above configuration, the first air compressor 12 is not driven when the required flow rate RF is greater than or equal to the second flow rate F2. That is, the first air compressor 12 does not supply air at the supply flow rate within the second air volume range R2. Therefore, the first air compressor 12 can be suppressed from deteriorating.

### (Second embodiment)

Referring to FIG. 4, a fuel cell system 202 of the second embodiment will be described. The same symbols will be used for the common components among the embodiments, and their descriptions will be omitted.

The fuel cell system 202 of the second embodiment comprises a first air compressor 212 and a second air compressor 214. The first air compressor 212 and the second air compressor 214 have different characteristics from those of the first air compressor 12 and the second air compressor 14 of the first embodiment. The first air compressor 212 and the second air compressor 214 have the same characteristics.

First characteristic information 262, second characteristic information 264, a first deterioration index 266, and a second deterioration index 268 are stored in the memory 54 of the controller 50 in the second embodiment. The first characteristic information 262 and the second characteristic information 264 are information indicating characteristics of the first air compressor 212 and the second air compressor 214, respectively.

As shown in FIG. 5, the first characteristic information 262 is sectioned into a first air volume range R11 and a second air volume range R12. The first air volume range R11 and the second air volume range R12 are a deterioration suppression range and a deterioration acceleration range, respectively. The first air volume range R11 is a range from a first flow rate F11 to a second flow rate F12 and from a third flow rate F13 to a fourth flow rate F14. The first flow rate F11 is equal to the lowest flow rate of air that the first air compressor 212 and the second air compressor 214 can supply. The third flow rate F13 is greater than the second flow rate F12. The fourth flow rate F14 is the same as the rated flow rate RF11 of the first air compressor 212 and the rated flow rate RF12 of the second air compressor 214. The second air volume range R12 is from the second flow rate F12 to the third flow rate F13. The second characteristic information 264 is sectioned into a third air volume range R13 and a fourth air volume range R14. The third air volume range R13 and the fourth air volume range R14 are the same as the first air volume range R11 and the second air volume range R12, respectively. That is, the first characteristic information 262 and the second characteristic information 264 are the same. Thus, the first air compressor 212 and the second air compressor 214 have the same rated flow rate, the same deterioration suppression range, and the same deterioration acceleration range.

The first deterioration index 266 and the second deterioration index 268 are information indicating the degrees of deterioration of the first air compressor 212 and the second air compressor 214, respectively. As an example, the deterioration indexes are information such as a time that the air compressor has operated in a predetermined speed range, information corresponding to a thermal load received by the air compressor, and the like.

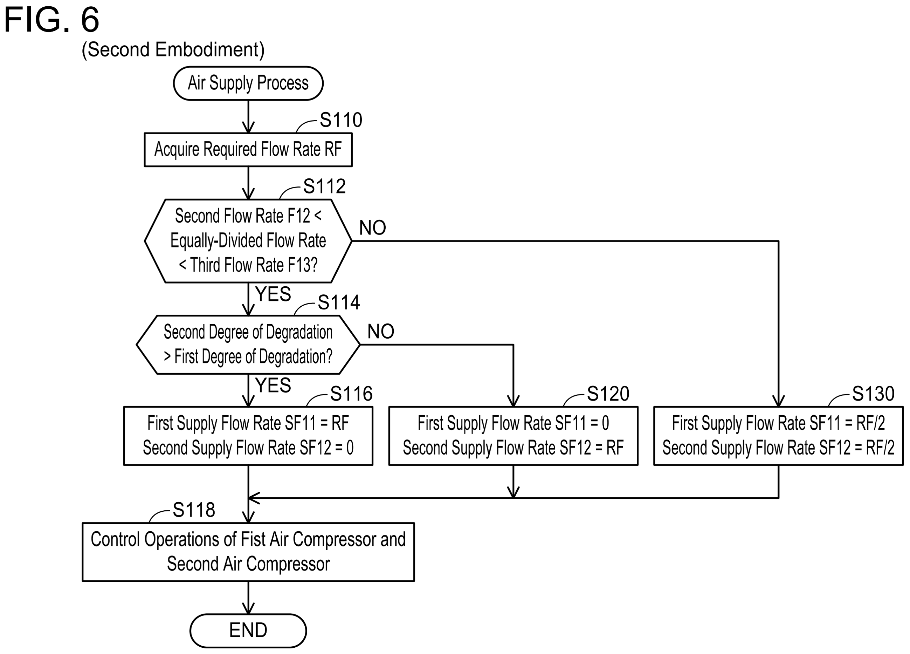

### (Air Supply Process; FIG. 6)

Referring to FIG. 6, an air supply process executed by the controller 50 of the fuel cell system 202 will be described.

S110 is the same as S10 in FIG. 3.

In S112, the controller 50 determines whether the equally-divided flow rate exceeds the second flow rate F12 and whether the equally-divided flow rate is less than the third flow rate F13. The equally-divided flow rate is the flow rate that is half the required flow rate RF. Specifically, the controller 50 determines whether the equally-divided flow rate is a flow rate within the second air volume range R12. If the equally-divided flow rate is the flow rate within the second air volume range R12 (YES in S112), the controller 50 proceeds to S114. Contrary to this, if the equally-divided flow rate is not the flow rate within the second air volume range R12 (NO in S112), the controller 50 proceeds to S130. The case of NO in S112 is when the equally-divided flow rate is the flow rate out of the second air volume range R12, i.e., the deterioration acceleration range.

In S114, the controller 50 determines whether the second degree of deterioration is greater than the first degree of deterioration by using the first deterioration index 266 and the second deterioration index 268 in the memory 54. That is, the controller 50 determines whether the second air compressor 214 is more deteriorated than the first air compressor 212. If the second degree of deterioration is greater than the first degree of deterioration (YES in S114), the controller 50 proceeds to S116. Contrary to this, if the second degree of deterioration is not greater than the first degree of deterioration (YES in S114), the controller 50 proceeds to S120.

In S116, the controller 50 determines the first supply flow rate SF11 to be equal to the required flow rate RF and the second supply flow rate SF12 to be zero.

In S118, the controller 50 controls operations of the first air compressor 212 and the second air compressor 214 based on the first supply flow rate SF11 and the second supply flow rate SF12. In S118 after S116, the controller 50 operates the first air compressor 212 and does not operate the second air compressor 214 so that the air at the required flow rate RF is supplied to the fuel cell stack 10. When S118 is completed, the controller 50 terminates the process of FIG. 6.

In S120, the controller 50 determines the second supply flow rate SF12 to be equal to the required flow rate RF and the first supply flow rate SF11 to be zero. When S120 is completed, the controller 50 proceeds to S118.

In S118 after S120, the controller 50 operates the second air compressor 214 and does not operate the first air compressor 212 so that air at the required flow rate RF is supplied to the fuel cell stack 10.

In S130, the controller 50 determines the first supply flow rate SF11 and the second supply flow rate SF12 to be equal to the equally-divided flow rate (i.e., the required flow rate RF/2).

In S118 after S130, the controller 50 operates each of the first air compressor 212 and the second air compressor 214 so that the equally-divided flow rate of air is supplied to the fuel cell stack 10.

As described above, the rated flow rate of the second air compressor 214 (an example of "second air supply device") is the same as the rated flow rate of the first air compressor 212 (an example of "first air supply device"). The second air volume range R12 (an example of "second range") is a range greater than or equal to the second flow rate F12 (an example of "fifth threshold flow rate") and less than the third flow rate F13 (an example of "sixth threshold flow rate"). The first air volume range R11 (an example of "first range") is a range less than the second flow rate F12 and greater than the third flow rate F13. The third air volume range R13 (an example of "third range") is the same as the first air volume range R11. The fourth air volume range R14 (an example of "fourth range") is the same as the second air volume range R12. The controller 50 determines the first supply flow rate SF11 and the second supply flow rate SF12 to be the equally-divided flow rate (S130) when the equally-divided flow rate is less than the second flow rate F12 or when the equally-divided flow rate is greater than or equal to the third flow rate F13 (NO in S112).

According to the above configuration, the first supply flow rate SF11 and the second supply flow rate SF12 are determined to be the equally-divided flow rate when the equally-divided flow rate is less than the fifth threshold flow rate or when the equally-divided flow rate is greater than or equal to the sixth threshold flow rate. According to this configuration, the first air compressor 212 and the second air compressor 214 can be suppressed from deteriorating.

The fuel cell system 2 further comprises the memory 54 configured to store the first deterioration index 266 and the second deterioration index 268. The controller 50 is configured to: when the equally-divided flow rate is greater than or equal to the second flow rate F12 and less than the third flow rate F13, and the second degree of deterioration is greater than the first degree of deterioration (YES in S112 and YES in S114), determine the first supply flow rate SF11 to be equal to the required flow rate RF and the second supply flow rate SF12 to be zero (S116). The controller 50 is configured to: when the equally-divided flow rate is greater than or equal to the second flow rate F12 and less than the third flow rate F13, and the first degree of deterioration is greater than the second degree of deterioration (YES in S112, NO in S114), determine the second supply flow rate SF12 to be equal to the required flow rate RF and the first supply flow rate SF11 to be zero (S120).

According to the above configuration, the first degree of deterioration and the second degree of deterioration can be equalized.

The embodiments have been described in detail in the above. However, these are only examples and do not limit the claims. The technology described in the claims includes various modifications and changes of the concrete examples represented above.

(First variation) The "air supply device" is not limited to an air compressor, but may be a blower for example.

(Second variation) In the first and second embodiments, three or more air compressors may be connected to the fuel cell stack 10.

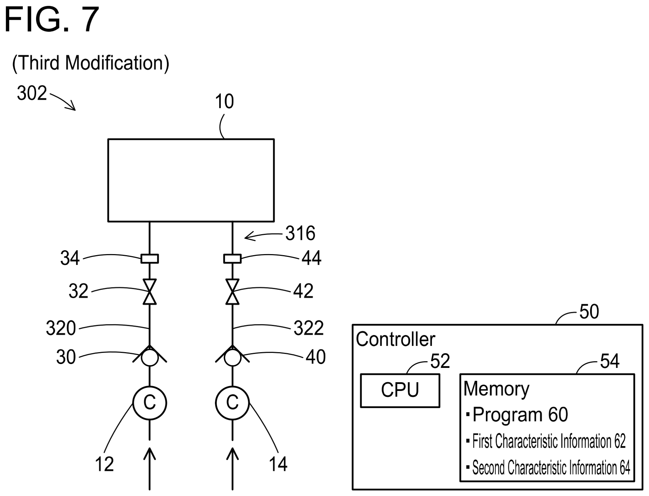

(Third variation) As shown in FIG. 7, the fuel cell system 2 may comprise a supply piping 316 having a first supply piping 320 and a second supply piping 322. In this variation, the downstream end of the first supply piping 320 and the downstream end of the second supply piping 322 are connected to the fuel cell stack 10. The piping connected to the first supply piping 320 in the fuel cell stack 10 and the piping connected to the second supply piping 322 in the fuel cell stack 10 may be joined in the fuel cell stack 10 or may be independent in the fuel cell stack 10.

(Fourth variation) In the first embodiment, S20 in FIG. 3 can be omitted. In this variation, the controller 50 may perform the process of S22 when S12 is determined to be NO.

(Fifth variation) In S30 of FIG. 3, the controller 50 may determine the first supply flow rate SF1 to be equal to the required flow rate RF and the second supply flow rate SF2 to be zero. In another variation, the controller 50 may determine the second supply flow rate SF2 to be equal to the required flow rate RF and determine the first supply flow rate SF1 to be zero in S30 of FIG. 3.

(Sixth variation) In the first embodiment, the controller 50 may execute S14 when the required flow rate RF is less than the second flow rate, and may execute S30 when the required flow rate RF is greater than or equal to the second flow rate.

(Seventh variation) In the second embodiment, S114 of FIG. 6 can be omitted. In this variation, the controller 50 may alternately operate the first air compressor 212 and the second air compressor 214 when S 112 is determined to be YES.

The technical elements explained in the present description or drawings exert technical utility independently or in combination of some of them, and the combination is not limited to one described in the claims as filed. Moreover, the technology exemplified in the present description or drawings achieves a plurality of objects at the same time, and has technical utility by achieving one of such objects.

## Claims

1. A fuel cell system (2; 202; 302) comprising:
a fuel cell stack (10);
a first air supply device (12; 212) configured to supply air to the fuel cell stack (10);
a second air supply device (14; 214) configured to supply the air to the fuel cell stack (10); and
a controller (50) configured to control operations of the first air supply device (12; 212) and the second air supply device (14; 214),
wherein the first air supply device (12; 212) has a characteristic that a degree of deterioration progresses more rapidly when supplying the air at a supply flow rate within a second range (R2; R12) than when supplying the air at a supply flow rate within a first range (R1; R11);
the second air supply device (14; 214) has a characteristic that a degree of deterioration progresses more rapidly when supplying the air at a supply flow rate within a fourth range (R4; R14) than when supplying the air at a supply flow rate within a third range (R3; R13),
wherein the controller (50) is configured to:
acquire a required flow rate of the air required by the fuel cell stack (10);
determine, based on the required flow rate, the first range (R1; R11), the second range (R2; R12), the third range (R3; R13), and the fourth range (R4; R14), both a first supply flow rate of the air to be supplied to the fuel cell stack (10) by the first air supply device (12; 212) and a second supply flow rate of the air to be supplied to the fuel cell stack (10) by the second air supply device (14; 214); and
control, based on the first supply flow rate and the second supply flow rate, operations of the first air supply device (12; 212) and the second air supply device (14; 214).

2. The fuel cell system (2) as in claim 1, wherein a rated flow rate of the second air supply device (14) is greater than a rated flow rate of the first air supply device (12),
the first range (R1) is a range less than a first threshold flow rate (F2),
the second range (R2) is a range greater than or equal to the first threshold flow rate (F2),
the third range (R3) is a range greater than or equal to a second threshold flow rate (F4), the second threshold flow rate (F4) being less than the first threshold flow rate (F2), and
the fourth range (R4) is a range less than or equal to the second threshold flow rate (F4),
wherein the controller (50) is configured to, when the required flow rate is less than the second threshold flow rate (F4), determine the first supply flow rate to be equal to the required flow rate and the second supply flow rate to be zero.

3. The fuel cell system (2) as in claim 1, wherein a rated flow rate of the second air supply device (14) is greater than a rated flow rate of the first air supply device (12),
the first range (R1) is a range less than a first threshold flow rate (F2),
the second range (R2) is a range greater than or equal to the first threshold flow rate (F2),
the third range (R3) is a range greater than or equal to a second threshold flow rate (F4), the second threshold flow rate (F4) being less than the first threshold flow rate (F2), and
the fourth range (R4) is a range less than or equal to the second threshold flow rate (F4),
wherein the controller (50) is configured to, when the required flow rate is greater than or equal to the first threshold flow rate (F2), determine the second supply flow rate to be equal to the required flow rate and the first supply flow rate to be zero.

4. The fuel cell system (202) as in claim 1, wherein a rated flow rate of the second air supply device (214) is the same as a rated flow rate of the first air supply device (212),
the second range (R12) is a range greater than or equal to a fifth threshold flow rate (F12) and less than a sixth threshold flow rate (F13), the sixth threshold flow rate (F13) being greater than the fifth threshold flow rate (F12),
the first range (R11) is a range less than the fifth threshold flow rate (F12) and greater than or equal to the sixth threshold flow rate (F13),
the third range (R13) is the same as the first range (R11), and
the fourth range (R14) is the same as the second range (R12), and
wherein the controller (50) is configured to, when an equally-divided flow rate, which is a half of the required flow rate, is less than the fifth threshold flow rate (F12) or the equally-divided flow rate is greater than or equal to the sixth threshold flow rate (F13), determine the first supply flow rate and second supply flow rate to be the equally-divided flow rate.

5. The fuel cell system (202) as in claim 4, further comprising a memory (54) configured to store a first deterioration index (266) correlating with a first degree of deterioration of the first air supply device (212) and a second deterioration index (268) correlating with a second degree of deterioration of the second air supply device (214),
wherein the controller (50) is configured to:
when the equally-divided flow rate is greater than or equal to the fifth threshold flow rate (F12) and less than the sixth threshold flow rate (F13), and the second degree of deterioration of the second air supply device (214) is greater than the first degree of deterioration of the first air supply device (212), determine the first supply flow rate to be equal to the required flow rate and the second supply flow rate to be zero, and
when the equally-divided flow rate is greater than or equal to the fifth threshold flow rate (F12) and less than the sixth threshold flow rate (F13), and the first degree of deterioration of the first air supply device (212) is greater than the second degree of deterioration of the second air supply device (214), determine the second supply flow rate to be equal to the required flow rate and the first supply flow rate to be zero.
